Europäisches Patentamt

European Patent Office

Office européen des brevets

(11) Veröffentlichungsnummer: 0 224 064
A2

(12) **EUROPÄISCHE PATENTANMELDUNG**

(21) Anmeldenummer: 86115011.8

(51) Int. Cl.⁴: **B29C 67/14**

(22) Anmeldetag: 29.10.86

(30) Priorität: 29.11.85 DE 3542217

(43) Veröffentlichungstag der Anmeldung:
03.06.87 Patentblatt 87/23

(84) Benannte Vertragsstaaten:
FR GB

(71) Anmelder: DORNIER GMBH
Postfach 1420
D-7990 Friedrichshafen 1(DE)

(72) Erfinder: Semrau, Hans Jürgen
Altenbergstrasse 13
D-7997 Immenstaad(DE)
Erfinder: Roth, Siegfried
Tobelstrasse 17
D-7777 Salem(DE)
Erfinder: Schröder, Hans-Wolfgang, Dr.
Kupferbergstrasse 27
D-7997 Immenstaad(DE)
Erfinder: Ludwig, Wolfgang, Dr.
Elblingweg 15
D-7758 Meersburg(DE)

(74) Vertreter: Landsmann, Ralf, Dipl.-Ing.
Kleeweg 3
D-7990 Friedrichshafen 1(DE)

(54) **Verfahren zur Herstellung von Bauteilen aus faserverstärkten Thermoplasten.**

(57) Bei dem Verfahren zur Herstellung von Bauteilen aus faserverstärkten Thermoplasten mittels Thermoplast-Vorformlingen und Verstärkungsfaser-Vorformlingen werden die Vorformlinge durch Druck und Wärme miteinander verbunden. Die Vorformlinge (3, 4) werden bei einem Druck zwischen 1 und 200 bar und einer über der Schmelztemperatur des Thermoplast-Vorformlings (4) liegenden Temperatur zusammengepreßt. Dabei durchtränken die schmelzflüssigen Thermoplast-Vorformlinge (4) die Verstärkungsfaser-Vorformlinge (3).

Fig. 1

## Verfahren zur Herstellung von Bauteilen aus faserverstärkten Thermoplasten

Die Erfindung betrifft ein Verfahren zur Herstellung von Bauteilen aus faserverstärkten Thermoplasten mittels Thermoplast-Vorformlingen und Verstärkungsfaser-Vorformlingen, bei dem die Vorformlinge mit durch Druck und Wärme miteinander verbunden werden.

Die Herstellung von Bauteilen aus endlosfaserverstärkten Thermoplasten ist aufwendig gegenüber der Herstellung von Bauteilen aus endlosfaserverstärkten Duroplasten, weil es z.B. ein den Duroplast-Prepregs entsprechendes Halbzeug bei Thermoplasten derzeit nicht gibt. Eine Möglichkeit der Herstellung besteht darin, alternierende Schichten von Thermoplastfolien und Fasergeweben bis über den Schmelzpunkt des Thermoplasten hinaus zu erhitzen und anschließend zu verpressen, wobei dann die Thermoplastschmelze die Fasergewebe durchdringt. Dieses sogenannte "film-stracking"-Verfahren ist aber für komplizierte Bauteile, z.B. mit zweifach gekrümmten Oberflächen und großen Verhältnissen von Tiefe zu Breite nicht anwendbar. Eine andere Möglichkeit ist das Tiefziehen von faserverstärktem plattenförmigen Halbzeug; es ist bei Endlosfaserverstärkung bestenfalls bei kleinen Verhältnissen von Tiefe zu Breite anwendbar.

Zur Herstellung solcher Verbundwerkstoffe ist es z.B. aus der DE-PS 32 36 447 bekannt, ein Matrixmaterial in einem ersten Schritt drucklos an ein ebenes Fasergewebe anzusintern und in einem zweiten Schritt mehrere vorbereitete Fasergewebe aneinander zu pressen. Versuche haben jedoch gezeigt, daß mit diesem Verfahren kompliziert geformte Bauteile nur - schwierig herstellbar sind, einen großen Aufwand erfordern und demzufolge hohe Kosten anfallen.

Aufgabe der Erfindung ist es, ein Verfahren anzugeben, mit dem Bauteile aus faserverstärkten Thermoplasten einfach und kostengünstig hergestellt werden können. Für bestimmte Bauteile, wie z.B. für Radome, sollten diese möglichst geringe Schwankungen des Fasergehalts, insbesondere des Glasfasergehalts aufweisen.

Gelöst wird die gestellte Aufgabe erfindungsgemäß durch die kennzeichnenden Merkmale des Anspruchs 1. Eine vorteilhafte Weiterbildung ergibt sich aus den Unteransprüchen.

Zur Herstellung der Bauteile werden Thermoplasten und aus Verstärkungsfasern gefertigte Vorformlinge verwendet, die der Form der Bauteile angenähert sind. Die Thermoplast-Vorformlinge werden dabei mittels gängiger thermoplastischer Verfahren hergestellt, z.B. durch Tiefziehen von Folien, Blasformen und Spritzgießen. Die Verstärkungsfaser-Vorformlinge können gewebt oder gestrickt oder aus Filz geformt sein. Gewebte Vorformlinge sind bereits bekannt und werden zur herstellung von Formteilen aus Duroplasten eingesetzt, z.B. zum Bau von Radomen für Flugzeuge.

Die Thermoplast-und Faservorformlinge werden in der Regel nicht alternierend geschichtet und anschließend verpreßt. Vielmehr werden mehrere Gewebelagen eines Faservorformlings von einem - schmelzflüssigen Thermoplast-Vorformling durchtränkt und anschließend miteinander verpreßt. Dabei muß die Temperatur über der Schmelztemperatur des Thermoplast-Vorformlings liegen und der zum Verpressen der beiden Vorformlinge verwendete Druck zwischen 1 und 200 bar betragen.

Die sich daraus ergebenden Vorteile bestehen darin, daß nur wenige, im Grenzfall nur ein Thermoplast-Vorformling herge stellt werden braucht. Die Vorformlinge können einfacher und damit billiger zu einem Vorformkörper zusammengestellt werden, welcher anschließend erhitzt und zum Bauteil verpreßt wird. Es lassen sich besonders günstige Bauteile herstellen, bei denen die Fasern auf der einen Wandseite konzentriert sind, während die andere Wandseite aus faserfreiem Thermoplastmaterial besteht. Ferner ist von Vorteil, daß sich die Verstärkungsfasern nicht oder nur geringfügig gegenüber ihrer Ausgangslage verschieben. Demgegenüber werden bei alternierender Anordnung von Faserlagen und Thermoplastfolien teilweise größere Verschiebungen beobachtet, die z.B. zu einer wellenförmigen Anordnung der Verstärkungslagen (Faserlagen) im Bauteil führen können. Eine derartiges Verhalten wird besonders dann beobachtet, wenn der Verpreßdruck mittels flexibler Druckübertragungsmedien, wie Gummistempeln, Gasen oder Flüssigkeiten aufgebracht wird.

Ausführungsbeispiele sind nachstehend beschrieben und durch Skizzen erläutert.

Es zeigen:

Figuren 1a, 1b die schematische Anordnung von Faser-und Thermoplastschichten und Herstellung von Bauteilen daraus,

Figuren 2a, 2b die Anordnung der Schichten gemäß Figur 1 in sandwichartigem Aufbau und Herstellung von Bauteilen daraus.

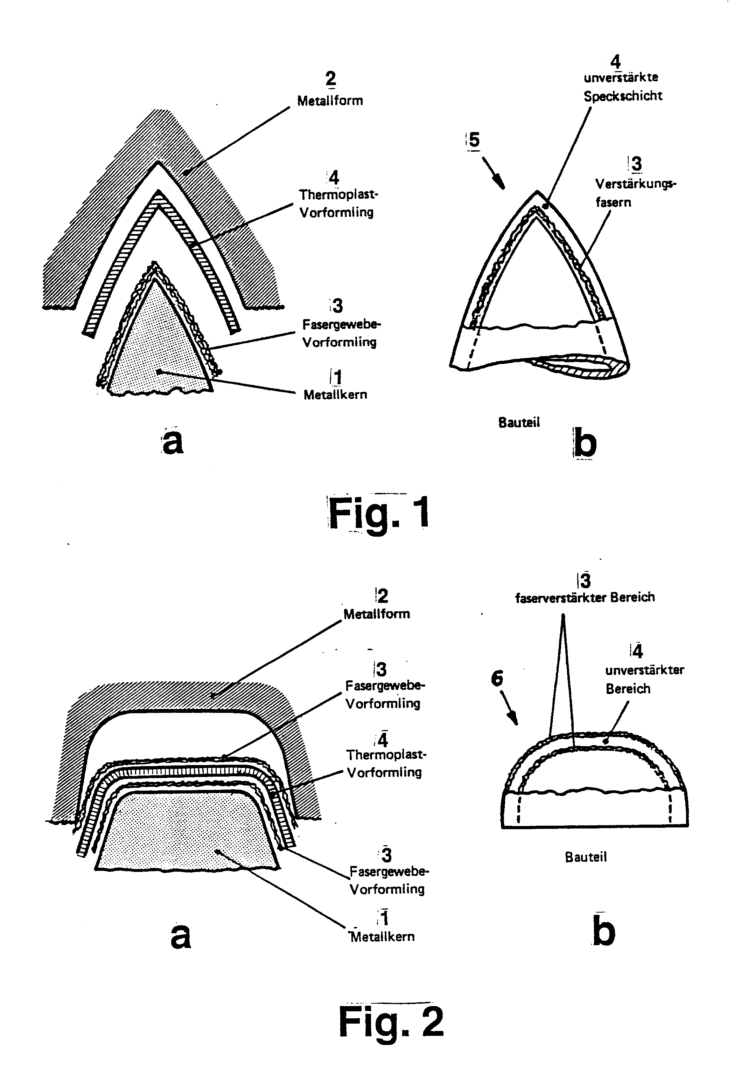

Aus Figur 1a ist die schematische Anordnung von Faser-und Thermoplastschichten zwischen einer aus einem Metallkern 1 und einer darüber angeordneten Metallform 2 ersichtlich. Beide Teile passen in ihrer Form so zueinander, daß die für das herzustellende Bauteil 5 (Figur 1b) gewünschte Form nach Beendigung des Verform-und Verpreßvorganges erhalten wird. Dabei werden zunächst die für die Verstärkung benötigten Fasern, Faserschichten oder Fasergewebe um oder über den Metallkern 1 gelegt, welche den Vertärkungsfaser-Vorformling 3 bilden. Darüber wird anschließend eine faserlose Thermoplastschicht gelegt, die den Thermoplast-Vorformling 4 bildet und über welche die Metallform 2 gelegt wird. Durch Gegeneinanderpressen des Metallkerns 1 gegen die Metallform 2 (oder umgekehrt) unter einem Druck zwischen 1 und 200 bar (dieser ist abhängig vom Material, aus welchem das Bauteil hergestellt werden soll) und unter Einwirkung einer Temperatur, die über der Schmelztemperatur des dazu verwendeten Thermoplastmaterials liegt, wird dieses zusammen mit den Faserschichten zu Vorformlingen 3, 4 geformt, wobei die Faserschichten vom schmelzflüssigen Thermoplastmaterial durchtränkt werden.

Figur 1b zeigt das nach Abkühlung der Vorformlinge 3, 4 fertige Bauteil 5. Hierbei sind die Verstärkungsfasern 3 auf der Innenseite des Bauteiles 5 konzentriert; seine Außenseite ist eine faserfreie und unverstärkte, sogenannte Speckschicht 4.

In Figuren 2a und 2b ist die Herstellung eines Bauteils 6 mit sandwichartigem Aufbau gezeigt, wobei der Herstellungsprozeß gleich dem in Figuren 1a und 1b beschriebenen ist. Unterschiedlich ist dabei lediglich, daß die Verstärkungsfasern 3 an der Außen-und an der Innenseite des Bauteils 6 liegen und der dazwischenliegende Bereich aus unverstärktem Thermoplastmaterial 4 besteht.

## Ansprüche

1. Verfahren zur Herstellung von Bauteilen aus faserverstärkten Thermoplasten mittels Thermoplast-Vorformlingen und Verstärkungsfaser-Vorformlingen, bei dem die Vorformlinge durch Druck und Wärme miteinander verbunden werden, **dadurch gekennzeichnet,** daß die Vorformlinge -(3, 4) bei einem Druck zwischen 1 und 200 bar und einer über der Schmelztemperatur des Thermoplast-Vorformlings (4) liegenden Temperatur zusammengepreßt werden und dabei die -schmelzflüssigen Thermoplast-Vorformlinge (4) die Verstärkungsfaser-Vorformlinge (3) durchtränken.

2. Verfahren nach Anspruch 1, **dadurch ge-kennzeichnet,** daß mehrere übereinander an-geordnete Verstärkungsfaser-Vorformlinge (3) von einem schmelzflüssigen Thermoplast-Vorformling -(4) durchtränkt werden.

3. Verfahren nach den Ansprüchen 1 und 2, **dadurch gekennzeichnet,** daß die Verstärkungsfasern (3) auf nur einer Wandseite des Bauteiles (6) konzentriert angeordnet sind und die andere Wandseite aus faserfreiem Thermoplastmaterial (4) besteht.

4. Verfahren nach den Ansprüchen 1 und 2, **dadurch gekennzeichnet,** daß der Aufbau der Verstärkungsfasern (3) im Bauteil (6) sandwichartig ist.

**Fig. 1**

**Fig. 2**